# EUROPEAN PATENT SPECIFICATION

(11) **EP 1 123 772 B1**
(45) Date of publication and mention of the grant of the patent: **13.12.2006**
(21) Application number: 00850004.3
(22) Date of filing: 14.01.2000
(51) Int. Cl.: B23K 26/08, B44B 7/00

(54) **Laser unit for marking the surface of a metal strip**
Lasereinheit zur Markierung von Metallbändern
Unité de laser pour marquer des bandes métalliques

(43) Date of publication of application: 16.08.2001
(73) Proprietor: Rexam Aktiebolag, 201 80 Malmö (SE)
(72) Inventor: Jendick, Manfred, 45661 Recklinghausen (DE)
(74) Representative: Bjerre, Nils Birger Johannes

(56) References cited:
- WO-A-98/53949
- WO-A-99/09853
- DE-A- 4 339 321
- US-A- 4 910 739
- US-A- 5 465 780
- US-A- 5 719 372

## Description

### Technical field

The present invention generally concerns the technique of manufacturing articles to be included in cans, in particular beverage cans. The invention is specifically, but not exclusively, related to articles in the form of opening tabs to be attached to shells for forming ends to such cans.

### Background Art

In a brochure entitled "This is PLM Fosie" issued by Applicant's Swedish company PLM Fosie AB in the mid nineties, there is shown on p. 6 how can ends are produced.

In a first production stage, a thin metal strip, preferably a 0.23-mm-thick aluminum strip, is fed to a processing apparatus in which the strip is punched and stamped to form opening tabs integrated with the strip. The tabs are also referred to as opener rings by persons skilled in the art.

In a second production stage, circular shells for forming the can ends are die cut from a thin metal sheet, preferably a 0.23-mm-thick aluminum sheet. Each shell is scored for opening, and a rivet for attachment of the tab is formed at the center of the shell.

In a third production stage, the strip with the integrated tabs are joined with the circular shells in an attachment station, in which the tabs are separated from the strip and attached to the shells by riveting. A finished can end is achieved when the tab is fastened to the shell.

This manufacture of can ends is conventional and well known to the skilled person. It should be mentioned that the whole process is automated with a capacity of about 2,000 ends per line per minute. In the beverage can industry, the production rate in general is very high and it is a continuous aim to decrease the production costs and the material used for can production, including the ends. Maintenance, tool changes and other downtime should be avoided to keep costs low.

As in other areas of the food and beverage industry, the traceability of the manufacturing and filling of the can is important. Today, there are so-called traceability marks or markings on the cans indicating when the filling took place and also when the main can body was manufactured. Normally, however, there is no traceability marking indicating when the finished can ends were produced. Such markings are often required for reasons of quality. For instance, the peripheral edge of the shell must be precisely formed to ensure a completely tight seam against the upper flange of the can. There are also several functional requirements placed on the tab and on the attachment of the same to the shell.

Except for the purpose of indicating the origin of the tabs, the markings on the same may also be used in other contexts. In a commercial aspect, markings on the bottom surface of the tab may indicate the winner in a lottery or the like. The quality requirements on such "promotional" markings are normally the same as in the cases where the origin is indicated.

Thus, there is a need for indicative markings on the tabs and the shells as well as on the can body.

US-A-4 459 910 discloses an arrangement for producing marked tabs from a continuous strip of metal. This arrangement comprises a press which, by a stamping and punching operation, shapes the strip into tabs to be included in cans. A feeder is arranged to intermittently feed the strip through the press at a rate commensurate with the operation of press. Markings are provided on a surface of the strip by means of an embossing machine arranged upstream of the press. The embossing machine comprises a plurality of embossing stamps arranged in an indexing wheel, so that different markings can be applied to the strip. Another machine for mechanically providing indicative markings on sheet metal by a stamping operation is disclosed in US-A-4 476 781.

One general problem in using such stamping or embossing operations to provide small indicative markings on metal surfaces is that these surfaces should be non-coated for acceptable results. Thus, surfaces that are coated with lacquer and/or paint can not readily be provided with such markings- The task of providing markings on the tab is especially difficult, due to the small tab surfaces available and the high requirements of elevated production rate. For material saving reasons, modern opening tabs are quite small, inevitably leaving only very limited tab surfaces for markings at high speed. If such markings are to be provided by stamping operations or the like, the tab surfaces must be increased. However, this calls for costly changes in the production equipment, increases the material cost and involves a risk of non-acceptance by the consumers. Further, the layout of "promotional" markings might be changed quite frequently, calling for frequent change of the tooling used for stamping the markings. Since such tooling is quite expensive, the cost for providing "promotional" markings can be considerable.

As to known laser systems, WO 98/53949 discloses a system for laser marking of a substrate in the shape of an encapsulated integrated circuit chip made of a plastic resin material with a filler, such as carbon or the like. The system comprises a laser source and a scanner configured to generate and direct a focussed laser beam to the substrate.

US-A-5,719,372 discloses another prior-art system for laser marking of a workpiece covered with a resin containing carbon. This system comprises a laser source, a scanner and a beam expander adapted to generate, focus and direct a laser beam to the workpiece.

### Summary of the Invention

The object of the invention is to find a solution to the above described problems and to provide an improved technique for manufacturing articles to be included in cans, which articles have distinct and indicative markings.

This object is achieved by a laser unit, an arrangement and methods according to the appended independent claims. Preferred embodiments are defined in the dependent claims.

The invention brings out several advantages. An enhanced technique of providing distinct markings on the article is accomplished, also when very limited areas are available for marking, such as on opening tabs. The new technique is suitable for the high production rates required in modern beverage can manufacturing. Further, the use of laser radiation permits marking of both non-coated and coated surfaces. Also, the layout of the markings can easily be changed, for example by input of a new engraving pattern to a control unit, e.g. a computer, that controls the engraving operation performed by the laser unit. In the case of traceability markings, the pattern can be updated every minute to provide an exact indication of when the finished article was produced. Likewise, promotional markings can be provided with great flexibility. Further, since a standard tab can be used, there is no need for tool change in the production line when no laser engravings are desired. The same production line can be used in both cases, since the operation of the laser unit in the preferred embodiment is easily disconnectible.

### Brief Description of the Drawings

In the following, presently preferred embodiments of the invention will be described, reference being made to the accompanying schematic drawings.
Fig. 1 is a side view of an arrangement including a laser unit according to a preferred embodiment of the invention.
Fig. 2 is a top view of an opening tab having markings on its top surface.
Fig. 3 is a bottom view of a tab having markings on its bottom surface.
Fig. 4 is a plan view of a portion of a metal strip used for producing the tabs shown in Figs 2-3.
Fig. 5 is schematic view of a first part of a laser unit according to a preferred embodiment of the invention.
Fig. 6 is a perspective view of a second part of a laser unit according to a preferred embodiment of the invention.

### Description of Preferred Embodiments

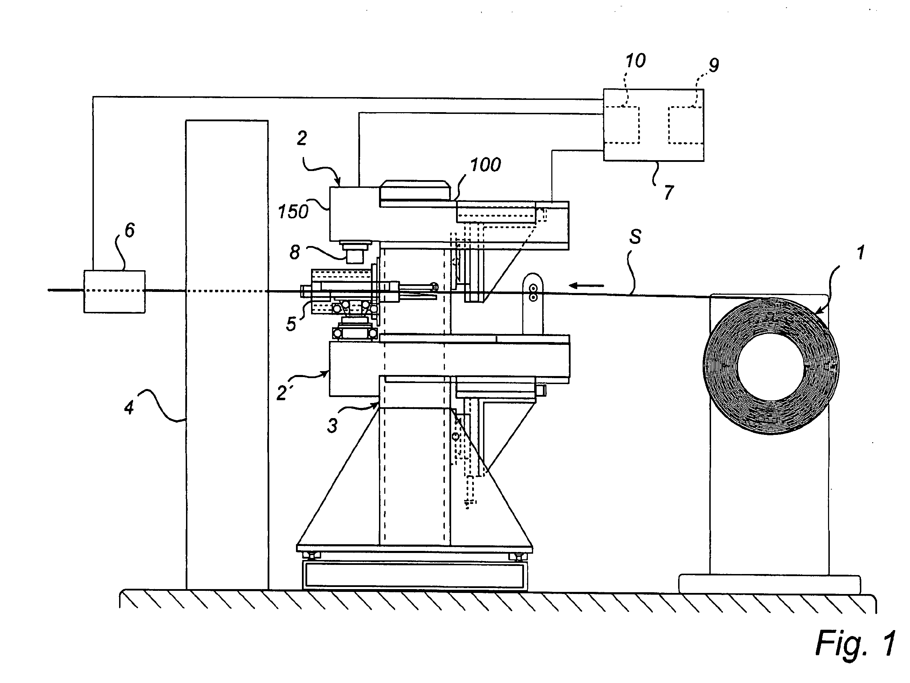

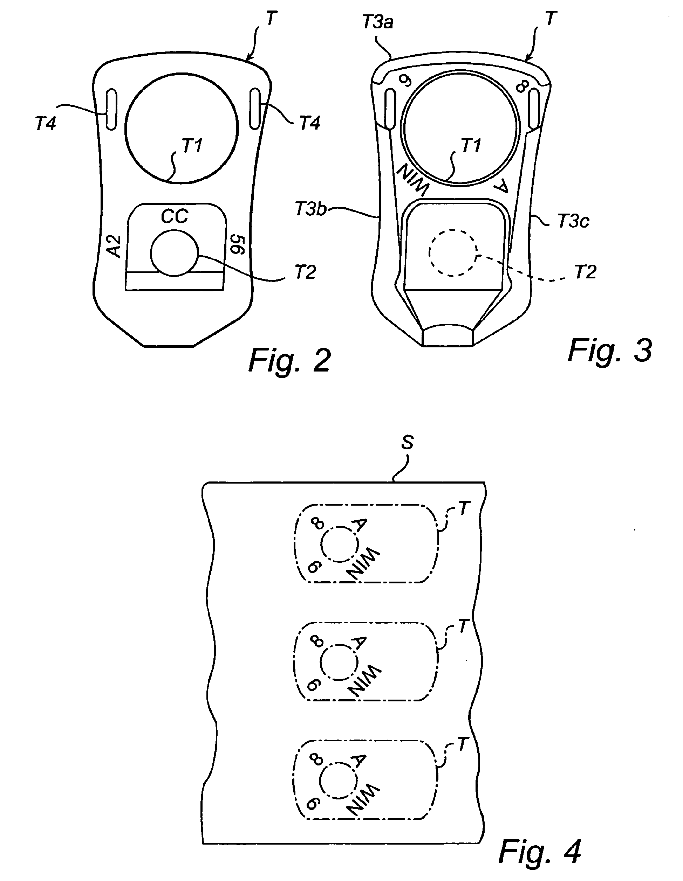

Fig. 1 shows part of an arrangement for manufacture of marked opening rings or tabs T (shown in Figs 2-4) to be included in ends for beverage cans (not shown). A blank in the form of a thin, continuous metal strip S is fed from a supply 1 to a laser unit 2 supported by a supporting member 3, and finally fed to a tab forming unit 4 which is of a type known per se and which forms the tabs T by punching and stamping the strip S.

The strip S is guided by a guiding device 5 when passing below the laser unit 2, and fed from the supply 1 by a feeding means 6 arranged in association with the tab forming unit 4. In the unit 4, the strip S is punched and stamped to form the tabs T integrated with the strip S.

In this type of arrangement, the strip S is only intermittently fed, or indexed, into the tab forming unit 4. Thus, the feeding means 6 is activated to feed the strip S after each completed stamping and punching operation in the tab forming unit 4.

The feeding rate of the strip S and the operation of the laser unit 2 are controlled by a computerized control unit 7 connected to the strip feeding means 6 and the laser unit 2. The laser unit 2, which will be described more in detail below, comprises a high-power and highspeed laser 100 capable of providing engravings in the tab surface, preferably with a depth of about 1-5 µm. Thus, the laser unit 2 is arranged between the strip supply 1 and the tab forming unit 4. Between the laser unit 2 and the guiding means 5 there is provided a device 8 for protecting the laser unit 2 from dust produced in the engraving process. It should be pointed out that the laser unit 2 may be installed in a standard production line for tabs T. The operation of the laser unit 2 may be disconnected, in which case the tab production line is used in a conventional manner.

The purpose of the laser unit 2 is to provide indicative, laser engraved markings on at least one of the upper and lower surfaces of the strip S depending on whether markings are desired on the top surface or on the bottom surface of the tab T, or on both these surfaces. In the embodiment shown in Fig. 1, the arrangement includes a second laser unit 2' which is arranged opposite to the laser unit 2 and is adapted to provide markings on an opposite side of the strip S. The following description of the laser unit 2 is equally applicable to the second laser unit 2' and will therefore not be repeated.

As shown in Figs 2 and 3, each tab T has an opening T1 and a rivet portion T2. In the tab forming operations, the peripheral edge portions T3a, T3b, T3c are bent inwardly in a manner known per se, as shown in Fig. 3. The purpose of this bending is to increase the stiffness of the tab T. Further, the tab T has a stiffening recess T4 on either side of the opening T1, see Fig. 2. The tab T shown in Fig. 2 has laser engraved markings A2, CC, 56 on its top surface, whereas the tab T in Fig. 3 has laser engraved markings WIN, A, 98 on its bottom surface.

The top markings A2, CC, 56 on the tab T shown in Fig. 2 serve as traceability markings indicating when the tab T was manufactured. These markings are codified in accordance with a specific system, where A2 is a week code (A-Z = week 1-26, a-z = week 27-52), CC is an hour code (A-X = hour 1-24) and 56 is a minute code (1-60). By this code system, it is exactly indicated when the tab T was produced.

The bottom markings WIN, A, 98 on the tab T shown in Fig. 3 serve as indications of a lottery, where the marking WIN indicates that the person who opens the can by means of the tab T is a winner. The other markings on the tab A, 98 constitute an identification of the lottery in question.

Fig. 4 shows a portion of the strip S after the laser engraving operation, and before the tab forming unit 4. The laser unit 2 has engraved the markings WIN, A, 98 on one surface of the strip S. The approximate periphery of the tab to be produced in the following tab forming steps in the unit 4 has been indicated with ghost lines in Fig. 4. In practice, the size of the laser engraved markings is about 1.4 x 1.2 mm, which makes them easily readable.

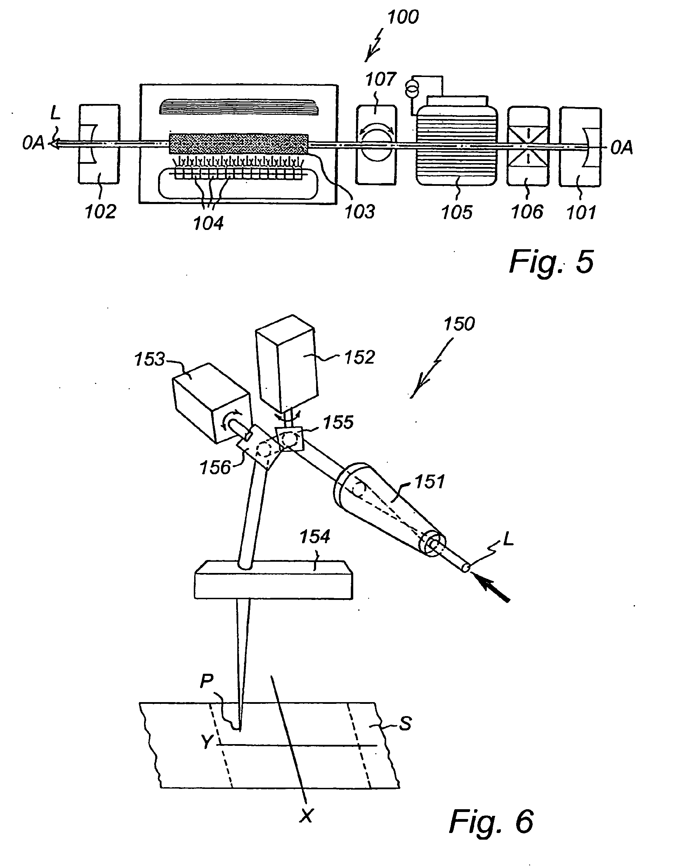

As indicated in Fig. 1 and shown in detail in Figs 5-6, the laser unit 2 comprises a laser 100 which is adapted to generate laser radiation in the form of a beam L at a suitable wavelength, and a so-called scanner head 150 which is adapted to receive the laser beam L from the laser 100 and focus and direct the generated laser beam L to a given location P on the strip surface. The inventive laser unit is operable to effect the laser engraving operation during the time period when the tab forming unit 4 performs a stamping and punching operation, i.e. when the strip S is in an immobilized condition. Therefore, the scanner head 150 is capable of focusing the laser radiation to a small spot and control the position of this spot in two dimensions on the strip surface. The requirements on the laser unit 2 are high in the sense that the laser engraved markings must be provided in an extremely short time due to the high feeding rate of the strip S. The laser radiation also has to be very accurately positioned on the strip S, since the tab surface available for the markings is very small.

It is preferred that the laser 100 generates radiation in the near IR region of approximately 1-10 µm since aluminum, normally used for manufacture of cans, exhibits high absorption of radiation in this region.

Further, it is preferred that the laser 100 is capable of generating pulsed laser radiation, since the maximum power of a laser pulse can be many times the rated power of the laser. This will increase the engraving efficiency of the laser unit 2.

In the most preferred embodiment, shown in Fig. 5, the laser 100 is a Nd:YAG laser generating radiation at 1.064 µm, and in particular a diode laser pumped Nd:YAG laser since this laser is capable of generating laser radiation with good mode quality. Thus, the radiation can be focused to a minute volume producing very distinct engravings. Compared to a conventional flash-lamp pumped Nd:YAG laser, the diode laser pumped Nd:YAG laser also has a high electrical to optical efficiency and, thus, less need for cooling.

The laser 100 of Fig. 5 outputs a laser beam L which is generated in an optical cavity defined by a highly reflecting rear mirror 101 and a partially reflecting (R≈80%) front mirror 102. A lasing medium 103 of Nd:YAG is arranged on the optical axis OA of the cavity and is surrounded by diode lasers 104 for pumping of the medium 103. A so-called Q-switch 105, e.g. a Pockels cell, is arranged in the cavity in a manner known per se, for generating intense lasing in a very short time period resulting in very high peak power laser pulses. A mode selection element 106, e.g. an iris diaphragm, is arranged within the laser cavity to block outer portions of the laser beam L in order to optimize its transverse mode characteristics. Thus, the laser can be forced to operate in a transverse mode that can be focused to a small volume, e.g. TEM₀₀. A shutter 107 is provided for blanking off the laser beam L.

Excellent results have been achieved in practice by a modified version of a diode laser pumped Nd:YAG laser (DynaMark T2) marketed by the German company IWKA. The laser emits pulses with a duration of 25 ns in a cycle time of approximately 0.1-1 µs. The average power per pulse is 25 kW, with a peak pulse power of about 100 kW. This laser power is adequate for engraving colored metal surfaces, but should be increased when engraving bare metal surfaces.

The scanner head 150 of Fig. 6 receives the laser beam L from the laser 100 and focuses it to a small spot P on the surface of the strip S. The scanner head 150 comprises a telescope 151 for beam expansion, two deflection devices 152, 153 for beam deflection, and a lens arrangement 154 for beam focusing. The laser beam L is first directed through the telescope 151 to increase the beam diameter. This will reduce the beam power per unit area to minimize damages to successive optical components and to optimize the beam size on the lens arrangement 154. Further, the size of the focal spot P on the strip surface will decrease by this procedure.

Each deflection device 152, 153 controls the deflection of the laser beam in one respective direction (x, y). By the combined action of the two deflection devices 152, 153, the laser beam L can be controlled in two dimensions over the strip surface. The deflection devices 152, 153, as well as the laser 100, are operated by the computerized control unit 7 (Fig. 1). Preferably, the deflection devices 152, 153 are galvanometers of a type known per se, in which the rotation of a mirror 155, 156 is controlled by means of an electromagnetic field and feedback control.

After passing the deflection devices 152, 153 the laser beam is directed through the lens arrangement 154, preferably a so-called flat-field lens. Such a flat-field lens is designed to focus the laser beam L perpendicular to a geometrical plane, in this case the strip surface. The focal length of the flat-field lens should be chosen with great care. With a large focal length, a small rotation of the mirrors 155, 156 will yield a large movement of the focal spot P on the strip surface, thereby allowing for fast displacement of the spot P. However, a too large focal length will yield a low precision in the positioning of the spot P as well as a larger spot size. A focal length of 120-190 mm has been found adequate, and optimum performance is achieved with a focal length of about 150-180 mm.

In the embodiment shown on the drawings, the control unit 7 is adapted to receive a pattern to be engraved on the surface of the strip S. This pattern is stored in a memory 9. A processor 10 is adapted to operate the laser unit 2 to produce the pattern in the strip surface. More specifically, the processor 10 is adapted to control the laser 100 to generate a laser pulse, and the scanner 150 to direct the laser radiation to a desired location P on the strip surface. Preferably, the processor 10 controls the time period between successive laser pulses, by controlling the Q-switch 105 and the diode lasers 104 of the laser 100, such that each laser pulse has sufficient energy to generate a visible pit with a depth of about 1-5 µm in the strip surface. Thus, although not evident from the drawings, each marking engraved in the strip surface is formed by a large number of such pits. Between each laser pulse, the mirrors 155, 156 of the deflection devices 152, 153 are controlled to move to a new location, thereby producing the pattern in the strip surface.

Since only a limited time period is available for producing the desired pattern in the strip surface, the processor 10 is adapted to, when a pattern is fed to and stored in the memory 9, calculate the positions of all pits in the strip surface. Further, before operating the laser unit 2, the processor 10 determines the optimum engraving path, i.e. the order in which the pits should be produced in the strip surface to form the pattern. In this context, it is preferred that the markings or characters in the pattern are engraved sequentially, i.e. that one marking is completed before another marking is provided. This approach has the ability of increasing both the engraving speed and the engraving accuracy, by minimizing vibrations in the mirrors 155, 156. Such vibrations might occur when the mirrors 155, 156 are brought to a halt on rotation to a new position, especially if the mirrors 155, 156 are rotated over a large angle. Thus, the distance between subsequent pits should be minimized.

As shown in Fig. 3, the markings are laser engraved on the tab surface between the opening T1 and the inwardly bent edge portions T3a, T3b and T3c provided by bending means (not shown) included in the tab forming unit 4. As explained above, the laser unit 2 must be controlled very accurately by means of the control unit 7 in order to provide distinct laser engraved markings on this small surface of the tab T. The positioning control of the focal spot P is important. Since there is a continuous aim to reduce the strip material used, the width of the tab T should be as small as possible, thus leaving only a limited surface for markings. By the high-power laser engraving according to the invention, distinct and indicative markings are provided on the tab T in spite of the small tab surface available.

In order for the tab forming unit 4 to form each tab from the intended portion of the strip S (cf. the laser-engraved areas marked by ghost lines in Fig. 4), the engraving operation should be effected as close as possible to the tab forming operation. However, the laser unit 2 should preferably be physically disconnected from the tab forming unit 4 due to the excessive vibrations produced in the latter. Preferably, a sensor (not shown) is arranged in association with the strip feeding means 6 or the tab forming unit 4. The sensor is adapted to indicate when the strip 1 is in an immobilized condition, e.g. by sensing a dwell condition of the strip feeding means 6, or the tab forming unit 4. The output signal of the sensor is fed to the control unit 7 which initiates the laser engraving operation on the surface of the immobilized strip S.

The laser unit 2 is disconnectible, which makes it possible to use the apparatus as a standard production line as well, even temporarily.

By effecting the laser engraving operation during the dwell time of the strip feeding means 6, the strip can be completely immobilized during the engraving operation. Typically, the tab production unit 4 operates at a speed of 640 strokes/min or higher, with the strip S being immobilized during approximately 60 ms. In this time, the inventive laser unit is capable of providing three laterally spaced tab-forming strip portions with six laser-engraved letters each, the letters having a height of about 1.4-2 mm (cf. Fig. 4).

Finally, it should be emphasized that the invention by no means is restricted to the embodiments described in the foregoing, and modifications are feasible within the scope of the appended claims. For example, a cw CO₂ laser could be used, although the focal spot P will be comparatively large since the laser has non-optimum mode characteristics and yields radiation at a longer wavelength (10.6 µm). Other suitable laser types might be used.

It should also be mentioned that the tabs T could be formed in the tab forming unit 4 by other means than stamping and punching operations.

It is also feasible to provide markings on a strip which has a coating, such as lacquer and/or paint. In this case, a lower laser power can be employed, since visible markings can be produced by selectively removing the coating from the strip surface.

The invention could also be used for laser engraving of other articles to be included in a can, for example the above-mentioned shell or the can body.

## Claims

1. A laser unit for providing markings on a surface of a continuous strip (S) of metal, said laser unit comprising:
beam generating means (100) for generating a beam (L) of laser radiation;
beam focusing means (154) for focusing the laser beam (L) onto said surface of said strip (S);
beam deflecting means (152, 153) which effects a controlled deflection of the laser beam (L) in two mutually perpendicular directions (x, y), said beam deflection means (152, 153) being arranged intermediate the beam generating means (100) and the beam focusing means (154); and
a computerized control unit (7) for operating the beam generating means (100) and the beam focusing means (154), said control unit (7) having a memory means (9) which receives and stores a pattern to be engraved on said surface, and a processor means (10) which operates said laser unit (2) to produce said pattern on said surface of said strip (S);
wherein said laser unit (2) is operable to provide laser engraved markings at exact locations on said surface when said strip (S) intermittently is in an immobilized condition before being fed into a processing apparatus (4), which mechanically shapes the thus-marked strip (S) into marked articles (T) to be included in cans, wherein the markings form said pattern on the articles (T).

2. A laser unit as set forth in claim 1, further comprising beam expansion means (151) which increases a diameter of the laser beam (L) emitted from the beam generating means (100), said beam expansion means (151) being arranged intermediate the beam generating means (100) and the beam deflecting means (152, 153).

3. A laser unit as set forth in claim 1 or 2, which is operable to provide about 1-5 µm deep engravings in said surface of said strip (S).

4. A laser unit as set forth in any one of claims 1-3, wherein the beam generating means (100) outputs laser radiation in the near IR wavelength range.

5. A laser unit as set forth in any one of claims 1-4, wherein the beam generating means (100) outputs laser radiation in a sequence of pulses.

6. A laser unit as set forth in claim 5, wherein said processor means (10) is adapted to conjointly control said beam generating means (100) and said beam deflecting means (152, 153) such that one or more of said pulses form a visible pit in said surface, and such that a number of such pits are formed in said surface to reproduce said pattern.

7. A laser unit as set forth in claim 6, wherein said processor means (10) controls the time period between subsequent pulses such that each pulse has sufficient energy to generate such a visible pit.

8. A laser unit as set forth in claim 7, wherein said processor means (10) is adapted to, based on said pattern in said memory means (9), calculate the positions of all of said pits on said surface before operating said laser unit (2) to produce said pattern.

9. A laser unit as set forth in any one of claims 5-8, wherein said pattern comprises a number of characters.

10. A laser unit as set forth in claim 9, wherein said processor means (10) controls the beam deflecting means (152, 153) such that said characters are provided sequentially one after the other on said surface.

11. A laser unit as set forth in any one of the preceding claims, wherein the beam generating means (100) comprises a Nd:YAG laser.

12. A laser unit as set forth in any one of the preceding claims, wherein the beam generating means (100) comprises a diode laser pumped Nd:YAG laser.

13. A laser unit as set forth in any one of the preceding claims, wherein the beam generating means (100) comprises a laser cavity, and a mode selection element (106) preferably being arranged in said laser cavity for obtaining suitable laser mode characteristics, preferably TEM₀₀.

14. A laser unit as set forth in claim 13, wherein said mode selection element (106) defines an aperture of variable diameter which is arranged to selectively transmit a portion of the laser beam (L).

15. A laser unit as set forth in any one of the preceding claims, wherein the beam focusing means comprises a flat-field lens (154) having an effective focal length of about 120-190 mm, preferably about 150-180 mm.

16. A laser unit as set forth in any one of the preceding claims, which is arranged in the immediate vicinity of, but is physically unconnected to, said processing apparatus (4).

17. A laser unit as set forth in any one of the preceding claims, the operation of which is disconnectible to allow for manufacture of articles (T) without marking of the strip (S).

18. A laser unit as set forth in any one of claims 1-16, wherein said marked articles are opening tabs (T) to be attached to ends for cans.

19. A laser unit as set forth in claim 18, which is operable to provide the laser engraved markings on said surface of said strip (S) such that each of said marked tabs (T) have said markings on a tab surface between an opening (T1) in said tab (T) and bent edge portions (T3a, T3b, T3c) of the tab (T).

20. An arrangement for shaping and marking a continuous strip (S) of metal, comprising a processing apparatus (4) which mechanically shapes said strip (S) into articles (T) to be included in cans, a feeding means (6) which intermittently feeds said strip (S) through said processing apparatus (4), and a laser unit (2) according to any one of the preceding claims.

21. A method for providing markings on a surface of a continuous strip (3) of metal by means of a laser unit, comprising the steps of:
- generating a beam (L) of laser radiation,
- focusing the laser beam (L) onto said surface of said strip (S),
- effecting a controlled deflection of the laser beam (L) in two mutually perpendicular directions (x, y) by means of a beam deflection means (152, 153),
- controlling the beam generating and beam focusing by a control unit (7),
- receiving and storing a laser engraved pattern in a memory means (9) of said control unit (7),
- operating said laser unit (2) to produce said pattern on said surface of the strip (S) and thereby
- providing laser engraved markings at exact locations on said surface when said strip (5) is intermittently in a immobilized condition before being fed into a processing apparatus (4), which mechanically shapes the thus-marked strip (S) into marked articles (T) to be included in cans, wherein the markings form said pattern on the articles.

22. A method for shaping and marking a continuous strip (S) of metal by means of an arrangement according to claim 20, comprising the steps of:
- mechanically shaping said strip (S) into articles (T), to be included in cans,
- intermittently feeding said strip (S) through said processing apparatus (4) by means of a feeding means (6), and
- marking said strip (S) by means of a laser unit (2) according to any one of claims 1-19.

## Patentansprüche

1. Lasereinheit, zum Schaffen von Markierungen auf einer Oberfläche eines durchgehenden Streifens oder einer durchgehenden Leiste (S) aus Metall, welche Lasereinheit ausweist:
Strahlerxeugungsraittel (100) zum Erzeugen eines Strahls (L) von Laserstrahlung;
Strahlfokussiermittel (154) zum Fokussieren des Laserstrahls (L) auf die Oberfläche des Streifens oder der Leiste (S),
Strahlablenkungsmittel (152, 153), die eine kontrollierte Ablenkung des Laserstrahls (L) in zwei zueinander senkrechten Richtungen (x, y) bewirken, welche Strahlablenkungsmittel (152, 153) zwischen den Strahlerzeugungsmitteln (100) und den Strahlfokussiermitteln (154) angeordnet sind; und
eine computerisierte Steuereinheit (7) zum Betreiben der Strahlerzeugungamittel (100) und der Strahlfokussiermittel (154), welche Steuereinheit (7) Speichermittel (9), die ein auf die Oberfläche zu gravierendes Muster empfangen und speichern, und Prozessormittel (10) hat, die die Lasereinheit (2) betreiben, um das Muster auf der Oberfläche des Streifens oder der Leiste (S) zu erzeugen;
wobei die Lasereinheit (2) betreibbar ist, lasergravierte Markierungen an genauen Stellen auf der Oberfläche zu schaffen, wenn der Streifen oder die Leiste (S) intermittierend sich in einem unbeweglichen Zustand befindet, bevor er/sie in eine Bearbeitungsvorrichtung (4) eingeführt wird, die den so markierten Streifen oder die so markierte Leiste (S) mechanisch in markierte Artikel (T) formt, die in Dosen enthalten sein sollen, wobei die Markierungen das Muster auf den Artikeln (T) bilden.

2. Lasereinheit nach Anspruch 1, die weiter Strahlaufweitungsmittel (151) aufweist, die den Durchmesser des Laserstrahls (L) vergrößern, der von den Strahlerzeugungsmitteln (100) emittiert wird, welche Strahlerweiterungsmittel (151) zwischen den Strahlerzeugungsmitteln (100) und den Strahlablenkungsmitteln (152, 153) angeordnet sind.

3. Lasereinheit nach Anspruch 1 oder 2, die betreibbar ist, um ungefähr 1-5 µm tiefe Gravierungen in der Oberfläche des Streifens oder der Leiste (S) zu schaffen.

4. Lasereinheit nach einem der Ansprüche 1-3, bei der die Strahlerzeugungsmittel (100) Laserstrahlung im nahen IR-Wellenlängenbereich abgeben.

5. Lasereinheit nach einem der Ansprüche 1-4, bei der die Strshierzeugungsmittel (100) Laserstrahlung in einer Sequenz von Pulsen abgeben.

6. Lasereinheit nach Anspruch 5, bei der die Prozessormittel (10) dazu ausgebildet sind, gemeinsam die Strahlerceugungsmittel (100) und die Strahlablenkungsmittel (152, 153) zu steuern, so dass einer oder mehrere der Pulse eins sichtbare Vertiefung in der Oberfläche bilden und so dass eine Anzahl solcher Vertiefungen in der Oberfläche gebildet werden , um das Muster zu reproduzieren.

7. Lasereinheit nach Anspruch 6, bei der die Prozessormittel (10) die Zeitperiode zwischen aufeinander folgenden Pulsen steuern, so dass jeder Puls ausreichend Energie hat, eine solche sichtbare Vertiefung zu erzeugen.

8. Lasereinheit nach Anspruch 7, bei der die Prozessormittel (10) dazu ausgebildet sind, beruhend auf dem Muster in den Speichermitteln (9) die Stellen aller Vertiefungen auf der Oberfläche zu berechnen, bevor die Lasereinheit (2) betrieben wird, das Muster zu erzeugen.

9. Lasereinheit nach einem der Ansprüche 5-8, bei der das Muster eine Anzahl von Zeichen aufweist.

10. Lasereinheit nach Anspruch 9, bei der die Prozessormittel (10) die Strahlablenkungsmittel (152, 153) so anderen auf der Oberfläche geschaffen werden.

11. Lasereinheit nach einem der vorangehenden Ansprüche, bei der die Strahlerzeugungsmittel (100) einen Nd: YAG-Laser aufweisen.

12. Lasereinheit nach einem der vorangehenden Ansprüche, bei der die Strahlerzeugungsmittel (100) einen diodenlaser-gepumpten Nd: YAG-Laser aufweisen.

13. Lasereinheit nach einem der vorangehenden Ansprüche, bei der die Strahlerzeugungsmittel (100) einen Laserhohlraum und ein Mode-Auswahlelement (106) aufweisen, das vorzugsweise in dem Laserhohlraum angeordnet ist, um geeignete Lasermodecharakteristiken, vorzugsweise TEM₀₀ zu erhalten.

14. Lasereinheit nach Anspruch 13, bei der das Mode-Auswahlelement (106) eine Blende mit variablem Durchmesser definiert, die ausgebildet ist, selektiv einen Teil des Laserstrahls (L) durchzulassen.

15. Lasereinheit nach einem der vorangehenden Ansprüche, bei der die Strahlfokussiermittel eine Flachfeldlinse (154) aufweisen, die eine effektive Brennweite von ungefähr 120-190 mm, vorzugsweise ungefähr 150-180 mm hat.

16. Lasereinheit nach einem der vorangehenden Ansprüche, die in der unmittelbaren Nähe zu der Verarbeitungsvorrichtung (4), aber physikalisch unverbunden mit derselben angeordnet ist.

17. Lasereinheit nach einem der vorangehenden Ansprüche, deren Betrieb unterbrechbar ist, um die Herstellung von Artikeln (T) ohne Markierung des Streifens oder der Leiste (S) zu ermöglichen.

18. Lasereinheit nach einem der Ansprüche 1-16, bei der die markierten Artikel Öffnungslaschen (T) sind, die an den Enden für Dosen angebracht werden sollen.

19. Lasereinheit nach Anspruch 18, die betreibbar ist, um die lasergravierten Markierungen auf der Oberfläche des Streifens oder der Leiste (S) so zu schaffen, dass jede der markierten Laschen (T) die Markierungen auf einer Laschenoberfläche zwischen, einer Öffnung (T1) in der Lasche (T) und gekrümmten Randbereichen (T3a, T3b, T3c) der Lasche (T) hat.

20. Anordnung zum Formen und Markieren eines durchgehenden Streifens oder einer durchgehenden Leiste (S) aus Metall, die eine Bearbeitungsvorrichtung (4), die mechanisch den Streifen oder die Leiste (S) in Artikel (T) formt, die in Dosen enthalten sein sollen, Zuführmittel (6) , die intermittierend den Streifen oder die Leiste (S) durch die Bearbeitungsvorrichtung führen, und eine Lasereinheit (2) gemäß einem der vorangehenden Ansprüche ausweist.

21. Verfahren zum Schaffen von Markierungen auf einer Oberfläche eines durchgehenden Streifens oder einer durchgehenden Leiste (S) aus Metall mit Hilfe einer Lasereinheit, das die Schritte aufweist:
- einen Strahl (L) von Laserstrahlung zu erzeugen,
- den Laserstrahl (L) auf die Oberfläche des Streifens oder der Leiste (S) zu fokussieren,
- eine gesteuerte Ablenkung des Laserstrahls (L) in zwei zueinander senkrechten Richtungen (x, y) mit Hilfe von Strahlablenkungsmitteln (152, 153) zu bewirken,
- die Erzeugung des Strahls und die Fokussierung des Strahle durch eine Steuereinheit (7) zu steuern,
- ein lasergraviertes Muster in Speichermittel (9) der Steuereinheit (7) zu empfangen und zu speichern,
- die Lasereinheit (2) zu betreiben, um das Muster auf der Oberfläche des Streifens oder der Leiste zu erzeugen und dabei
- lasergravierte Markierungen an genauen Orten auf der Oberfläche zu schaffen, wenn der Streifen oder die Leiste (S) sich intermittierend in einem bewegungslosen Zustand befindet, bevor sie in eine Bearbeitungsvorrichtung (4) eingeführt wird, die mechanisch den so markierten Streifen oder die so markierte Leiste (S) in markierte Artikel (T) formt, die in Dosen, enthalten sein seilen, wobei die Markierungen das Muster auf den Artikeln bilden.

22. Verfahren zum Formen und Markieren eines durchgehenden Streifens oder einer durchgehenden Leiste (S) aus Metall mit Hilfe einer Anordnung gemäß Anspruch 20, das die Schritte aufweist :
- mechanisch den Streifen oder die Leiste (S) in Artikel (T) zu formen, die in Dosen enthalten sein sollen,
- intermittierend den Streifen oder die Leiste (S) durch die Bearbeitungsvorrichtung (4) mit Hilfe von Zuführungsmitteln (6) zuzuführen, und
- den Streifen oder die Leiste (5) mit Hilfe einer Lasereinheit (2) gemäß einem der Ansprüche 1-19 zu markieren.

## Revendications

1. Unité de laser pour réaliser des marquages sur une surface d'une bande continue (S) en métal, ladite unité de laser comprenant:
un moyen de génération de faisceau (100) pour générer un faisceau (L) de rayonnement laser ;
un moyen de focalisation de faisceau (154) pour focaliser le faisceau laser (L) sur ladite surface de ladite bande (S) ;
un moyen de déviation de faisceau (152, 153) qui réalise une déviation contrôlée du faisceau laser (L) selon deux directions mutuellement perpendiculaires (x, y), ledit moyen de délation de faisceau (152, 153) étant agencé en une position intermédiaire entre le moyen de génération de faisceau (100) et le moyen de focalisation de faisceau (154) ; et
une unité de commande numérisée (7) pour faire fonctionner le moyen de génération de faisceau (100) et le moyen de focalisation de faisceau (154), ladite unité de commande (7) comportant un moyen de mémoire (9) qui reçoit et stocke un motif destiné à être gravé sur ladite surface, et un moyen de processeur (10) qui fait fonctionner ladite unité de laser (2) pour produire ledit motif sur ladite surface de ladite bande (S),
dans lequel ladite unité de laser (2) peut fonctionner pour réaliser des marquages gravés par laser en des localisations exactes sur ladite surface lorsque ladite bande (S) est par intermittence dans une condition immobilisée avant d'être alimentée dans un appareil de traitement (4), lequel conforme mécaniquement la bande ainsi marquée (S) selon des articles marqués (T) destinés à être inclus dans des conteneurs, où les marquages forment ledit motif sur les articles (T).

2. Unité de laser selon la revendication 1, comprenant en outre un moyen d'extension de faisceau (151) qui augmente un diamètre du faisceau laser (L) qui est émis depuis le moyen de génération de faisceau (100), ledit moyen d'extension de faisceau (151) étant agencé en une position intermédiaire entre le moyen de génération de faisceau (100) et le moyen de déviation de faisceau (152, 153).

3. Unité de laser selon la revendication 1 ou 2, laquelle peut fonctionner pour assurer des gravures d'une profondeur d'environ 1 à 5 µm dans ladite surface de ladite bande (S).

4. Unité de laser selon l'une quelconque des revendications 1 à 3, dans laquelle le moyen de génération de faisceau (100) émet en sortie un rayonnement laser dans la plage des longueurs d'onde des infrarouges proches.

5. Unité de laser selon l'une quelconque des revendications 1 à 4, dans laquelle le moyen de génération de faisceau (100) émet en sortie un rayonnement laser selon une séquence d'impulsions.

6. Unité de laser selon la revendication 5, dans laquelle ledit moyen de processeur (10) est adapté pour commander de façon conjointe ledit moyen de génération de faisceau (100) et ledit moyen de déviation de faisceau (152, 153) de telle sorte qu'une ou plusieurs desdites impulsions forment une piqûre visible dans ladite surface et de telle sorte qu'un certain nombre de ces piqûres soient formées dans ladite surface pour reproduire ledit motif.

7. Unité de laser selon la revendication 6, dans laquelle ledit moyen de processeur (10) commande la période temporelle entre des impulsions suivantes de telle sorte que chaque impulsion présente une énergie suffisante pour générer une telle piqûre visible.

8. Unité de laser selon la revendication 7, dans laquelle ledit moyen de processeur (10) est adapté pour, sur la base dudit motif dans ledit moyen de mémoire (9), calculer les positions de toutes lesdites piqûres sur ladite surface avant le fonctionnement de ladite unité de laser (2) afin de produire ledit motif.

9. Unité de laser selon l'une quelconque des revendications 5 à 8, dans laquelle ledit motif comprend un certain nombre de caractères.

10. Unité de laser selon la revendication 9, dans laquelle redit moyen de processeur (10) commande le moyen de déviation de faisceau (152, 153) de telle sorte que lesdits caractères soient appliqués de façon séquentielle les uns après les autres sur ladite surface.

11. Unité de laser selon l'une quelconque des revendications précédentes, dans laquelle le moyen de génération de faisceau (100) comprend un laser Nd:YAG.

12. Unité de laser selon l'une quelconque des revendications précédentes, dans laquelle le moyen de génération de faisceau (100) comprend un laser Nd:YAG pompé par laser à diode.

13. Unité de laser selon l'une quelconque des revendications précédentes, dans laquelle le moyen de génération de faisceau (100) comprend une cavité de laser et un élément de sélection de mode (106) qui est agencé de préférence dans ladite cavité de laser pour obtenir des caractéristiques de mode de laser appropriées, de préférence TEM₀₀.

14. Unité de laser selon la revendication 13, dans laquelle ledit élément de sélection de mode (106) défait une ouverture de diamètre variable qui est agencée de manière à transmettre de façon sélective une partie du faisceau laser (L).

15. Unité de laser selon l'une quelconque des revendications précédentes, dans laquelle le moyen de focalisation de faisceau comprend une lentille de champ plat (154) qui présente une distance focale efficace d'environ 120 à 190 mm, de préférence d'environ 150 à 180 mm.

16. Unité de laser selon l'une quelconque des revendications précédentes, qui est agencée au voisinage immédiat dudit appareil de traitement (4) mais qui lui est physiquement non connectée.

17. Unité de laser selon l'une quelconque des revendications précédentes, dont le fonctionnement peut être déconnecté pour permettre la fabrication d'articles (T) sans marquage de la bande (S).

18. Unité de laser selon l'une quelconque des revendications 1 à 16, dans laquelle lesdits articles marqués sont des pattes d'ouverture (T) destinées à être fixées à des extrémités pour des conteneurs.

19. Unité de laser selon la revendication 18, qui peut fonctionner pour produire les marquages gravés par laser sur ladite surface de ladite bande (S) de telle sorte que chacune desdites pattes marquées (T) comporte lesdits marquages sur une surface de patte entre une ouverture (T1) dans ladite patte (T) et des parties de bord incurvées (T3a, T3b, T3c) de la patte (T).

20. Agencement pour conformer et marquer une bande continue (S) en métal, comprenant un appareil de traitement (4) qui conforme mécaniquement ladite bande (S) selon des articles (T) destinés à être inclus dans des conteneurs, un moyen d'alimentation (6) qui alimente par intermittence ladite bande (S) au travers dudit appareil de traitement (4) et une unité de laser (2) selon l'une quelconque des revendications précédentes.

21. Procédé pour réaliser des marquages sur une surface d'une bande continue (S) en métal au moyen d'une unité de laser, comprenant les étapes de :
- génération d'un faisceau (L) de rayonnement laser ;
- focalisation du faisceau laser (L) sur ladite surface de ladite bande (S) ;
- réalisation d'une déviation contrôlée du faisceau laser (L) suivant deux directions mutuellement perpendiculaires (x, y) au moyen d'un moyen de déviation de faisceau (152, 153) ;
- commande de la génération de faisceau et de la focalisation de faisceau au moyen d'une unité de commande (7) ;
- réception et stockage d'un motif gravé par laser dans un moyen de mémoire (9) de ladite unité de commande (7) ;
- fonctionnement de ladite unité de laser (2) de manière à produire ledit motif sur ladite surface de la bande (S) et ainsi
- réalisation de marquages gravés par laser en des localisations exactes sur ladite surface lorsque ladite bande (S) est par intermittence dans une condition immobilisée avant qu'elle ne soit alimentée dans un appareil de traitement (4), lequel conforme mécaniquement la bande ainsi marquée (S) selon des articles marqués (T) destinés à être inclus dans des conteneurs, où les marquages forment ledit motif sur les articles.

22. Procédé pour conformer et marquer une bande continue (S) en métal au moyen d'un agencement selon la revendication 20, comprenant les étapes de :
- conformation mécaniquement de ladite bande (S) selon des articles (T) destinés à être inclus dans des conteneurs ;
- alimentation par intermittence de ladite bande (S) au travers dudit appareil de traitement (4) au moyen d'un moyen d'alimentation (6) ; et
- marquage de ladite bande (S) au moyen d'une unité de laser (2) selon l'une quelconques des revendications 1 à 19.
